# EUROPÄISCHE PATENTSCHRIFT

(11) **EP 1 030 992 B1**
(45) Veröffentlichungstag und Bekanntmachung des Hinweises auf die Patenterteilung: **29.08.2001**
(21) Anmeldenummer: 98962212.1
(22) Anmeldetag: 06.11.1998
(51) Int. Cl.: F16L 11/133

(54) **AUFTRIEBSKÖRPER FÜR SCHWIMMSCHLÄUCHE**
FLOAT FOR BUOYANT HOSES
FLOTTEUR POUR TUYAUX FLOTTANTS

(30) Priorität: 14.11.1997 DE 19750369
(43) Veröffentlichungstag der Anmeldung: 30.08.2000
(73) Patentinhaber: PHOENIX AKTIENGESELLSCHAFT, 21079 Hamburg (DE)
(72) Erfinder: FRIEDERICH, Hans-Werner, D-21423 Winsen (DE); MAASS, Uwe, D-22149 Hamburg (DE)
(86) Internationale Anmeldenummer: DE9803234
(87) Internationale Veröffentlichungsnummer: WO9926006

(56) Entgegenhaltungen:
- WO-A-96/01385
- FR-A- 2 203 957

## Beschreibung

Die Erfindung betrifft einen Auftriebskörper für Schwimmschläuche, bestehend mindestens aus einem mehrschichtigen Schaumkörper, der den Schwimmschlauch umgibt, wobei der Schaumkörper aus einzelnen Schaumplatten zusammengesetzt ist, und zwar unter Bildung einer Radialverbindung, die innerhalb einer Schicht zwei aneinanderstoßende Schaumplatten haftend miteinander verbindet, sowie einer Axialverbindung, die von Schicht zu Schicht zwei aneinandergrenzende Schaumplatten ebenfalls haftend miteinander verbindet (WO-A-96/01385).

Schwimmschläuche werden mit integrierten Auftriebskörpern bzw. mit Einzelauftriebskörpern aus Kunststoff hergestellt. Für Schläuche mit integrierten Auftriebskörpern werden in der Regel Schäume mit geschlossenen Poren eingesetzt. Um den Auftriebskörper auf den Schlauch aufzubauen, werden zumeist Schaumplatten aufgeklebt oder aufgeschweißt.

Die Verbindungstechnologie des Aufklebens oder Aufschweißens weist jedoch eine Reihe von Nachteilen auf. Nachteilig bei Klebeverbindung ist, daß sehr viel Lösungsmittel beim Kleben freigesetzt wird. Das Klebe- wie auch Schweißverfahren zwischen den einzelnen Schaumplatten in axialer Richtung ist in der Regel unproblematisch. Die Verbindungen in radialer Richtung müssen jedoch beim Biegen eines Schwimmschlauches die Zug- bzw. Stauchkräfte aushalten. Hier kommt es immer wider durch Spannungsspitzen zu Brüchen. Bei einer Beschädigung der Außenhaut dringt Wasser in diese zerstörten Hohlräume ein und verschlechtert das Auftriebsverhalten des Schwimmschlauches.

Die Aufgabe der Erfindung besteht nun darin, einen Auftriebskörper für Schwimmschläuche bereitzustellen, bei dem die oben geschilderten Probleme nicht mehr auftreten, und zwar unter dem Gesichtspunkt einer störungsfreien Langzeitnutzung.

Gelöst wird diese Aufgabe durch die kennzeichnenden Merkmale des Patentanspruches 1 (Variante A) oder des Patentanspruches 2 (Variante B), wobei diese beiden Varianten im folgenden näher erläutert werden.

### Variante A

Nach dieser Variante ist ausschließlich die Radialverbindung durch eine Schicht aus einem polymeren Werkstoff gebildet, der bei Wärme aufschäumt und ein größeres Volumen einnimmt. Bei der Vulkanisation verbindet sich diese polymere Schicht mit den Schaumplatten. Da das Schaummaterial dieser Platten während der Vulkanisation schrumpfen kann, wird bei der Radialverbindung der entstehende Hohlraum an den Spleißverbindungen durch den bei Wärme aufschäumbaren Werkstoff ausgefüllt.

Bei dieser sehr wirksamen Radialverbindung kann man bei der Herstellung der Axialverbindung ohne weiteres auf die bekannte Verbindungstechnologie des Schweißens oder Klebens zurückgreifen.

Vorteilhafterweise wird jedoch zusätzlich die Axialverbindung durch eine Schicht aus einem nichtaufschäumbaren Werkstoff gebildet, wobei die einzelnen Schichten für die Radial- und Axialverbindung so miteinander verbunden sind, daß jede Schaumplatte vollständig eingekammert ist. Bei einer Beschädigung der Außenhaut kann das Wasser nur in eine Kammer oder wenige Kammern eindringen. Damit wird das Schwimmverhalten nur minimal beeinflußt. Die Folge ist, daß der Schwimmschlauch eine höhere Standzeit hat und länger zu gebrauchen ist.

### Variante B

Nach dieser Variante ist sowohl die Radialverbindung als auch die Axialverbindung durch eine Schicht aus einem nichtaufschäumbaren polymeren Werkstoff gebildet, wobei die einzelnen Schichten für die Radial- und Axialverbindung so miteinander verbunden sind, daß jede Schaumplatte vollständig eingekammert ist. Bei einer Beschädigung der Außenhaut gilt auch hier das oben Gesagte.

Unabhängig von den beiden Varianten gelten zweckmäßigerweise folgende werkstoffspezifischen Gesichtspunkte:
- Die Schaumplatten bestehen aus Polyethylen (PE), Polyurethan (PU), Polypropylen (PP), Polystyrol (PS) oder Polyvinylchlorid (PVC).
- Der polymere Werkstoff für die Radialverbindung und Axialverbindung ist jeweils eine Kautschukmischung auf Basis Ethylen-Propylen-Dien-Mischpolymerisat (EPDM) oder eines Verschnittes von EPDM mit Naturkautschuk (NR) und/oder mit Styrol-Butadien-Kautschuk (SBR), vorzugsweise in Verbindung mit einer Schaumplatte aus PE oder PP.
- Der polymere Werkstoff für die Radialverbindung und Axialverbindung ist jeweils eine Kautschukmischung auf Basis Polyurethan (PUR; Kurzbezeichnung für Polyurethan-Elastomere) oder eines Verschnittes von PUR mit Nitrilkautschuk (NBR), vorzugsweise in Verbindung mit einer Schaumplatte aus PU (Kurzbezeichnung für Polyurethanschaumstoffe).
- Der polymere Werkstoff für die Radialverbindung und Axialverbindung ist jeweils eine Kautschukmischung auf Basis SBR oder eines Verschnittes von SBR mit EPDM und/oder mit NR, vorzugsweise in Verbindung mit einer Schaumplatte aus PS.
- Der polymere Werkstoff für die Radialverbindung und Axialverbindung ist jeweils eine Kautschukmischung auf Basis NBR oder eines Verschnittes von NBR mit PVC, vorzugsweise in Verbindung mit einer Schaumplatte aus PVC.

Die hier aufgeführten Werkstoffe für die Radial- und Axialverbindungen sind Elastomere bzw. thermoplastische Elastomere. Sie verleihen daher diesen Verbindungen elastische Eigenschaften, die zusätzlich zu einer verlängerten Lebensdauer des Auftriebskörpers beitragen.

Bei den aufschäumbaren polymeren Werkstoffen für die Radialverbindung gemäß Variante A kommen handelsübliche Treibmittel zum Einsatz. Diese Treibmittel sind insbesondere Substanzen, die unter dem Einfluß von Wärme gasförmige Teilchen bilden und somit den polymeren Werkstoff zum Aufschäumen bringen.

Die Erfindung wird nun anhand eines Ausführungsbeispieles unter Bezugnahme auf eine schematische Zeichnung (Längsschnittdarstellung) erläutert, und zwar in Verbindung mit folgender Bezugsziffernliste:
1 Schwimmschlauch
2 Auftriebskörper
3 Schaumplatte
4 Schaumplatte
5 Schaumplatte
6 Radialverbindung
7 Axialverbindung
8 Außenhaut
9 Flansch

Nach dieser Figur besteht der Auftriebskörper **2** aus einem mehrschichtigen Schaumkörper, der den Schwimmschlauch **1** umgibt. Dabei ist dieser Schaumkörper aus einzelnen Schaumplatten **3, 4** und **5** zusammengesetzt, und zwar unter Bildung einer Radialverbindung **6,** die innerhalb einer Schicht zwei aneinanderstoßende Schaumplatten **3** und **4** haftend miteinander verbindet, sowie einer Axialverbindung **7,** die von Schicht zu Schicht zwei aneinandergrenzende Schaumplatten **3** und **5** ebenfalls haftend miteinander verbindet.

Was die erfindungsgemäße Radialverbindung **6** und Axialverbindung **7** betrifft, wird auf das bisher Vorgetragene verwiesen, wobei ergänzend noch folgendes anzumerken wäre:
- Die Radialverbindung **6** und Axialverbindung **7** weisen jeweils eine Mindestschichtstärke von 0,5 mm auf.
- Die Radialverbindung **6** besitzt einen Winkel α von 45° bis 90°, und zwar bezogen auf die Axialverbindung **7.**
- Der Auftriebskörper **2** ist zumeist mit einer Außenhaut **8** versehen, die aus einem Elastomer, einem thermoplastischen Elastomer oder einem Thermoplast besteht.
   Diesbezüglich wie auch auf eventuelle Zusatzmaßnahmen wird auf die Druckschrift WO-A-96/01385, die sehr ausführlich auf den Stand der Technik der Auftriebskörper für Schwimmschläuche eingeht, verwiesen.
- In der Regel ist der Schwimmschlauch **1** noch mit endständig angeordneten Flanschen **9** ausgestattet. Durch Aneinanderreihung derartiger Schwimmschläuche entstehen größere Offshore-Anlagen.

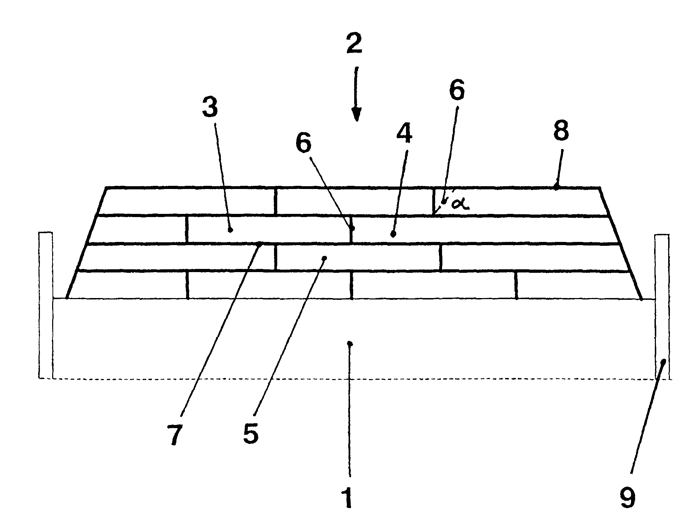

## Patentansprüche

1. Auftriebskörper (2) für Schwimmschläuche, bestehend mindestens aus
- einem mehrschichtigen Schaumkörper, der den Schwimmschlauch (1) umgibt, wobei der Schaumkörper aus einzelnen Schaumplatten (3, 4, 5) zusammengesetzt ist, und zwar unter Bildung einer Radialverbindung (6), die innerhalb einer Schicht zwei aneinanderstoßende Schaumplatten (3, 4) haftend miteinander verbindet, sowie einer Axialverbindung (7), die von Schicht zu Schicht zwei aneinandergrenzende Schaumplatten (3, 5) ebenfalls haftend miteinander verbindet;
dadurch gekennzeichnet, daß
- ausschließlich die Radialverbindung (6) durch eine Schicht aus einem polymeren Werkstoff gebildet ist, der bei Wärme aufschäumt und ein größeres Volumen einnimmt.

2. Auftriebskörper (2) für Schwimmschläuche, bestehend mindestens aus
- einem mehrschichtigen Schaumkörper, der den Schwimmschlauch (1) umgibt, wobei der Schaumkörper aus einzelnen Schaumplatten (3, 4, 5) zusammengesetzt ist, und zwar unter Bildung einer Radialverbindung (6), die innerhalb einer Schicht zwei aneinanderstoßende Schaumplatten (3, 4) haftend miteinander verbindet, sowie einer Axialverbindung (7), die von Schicht zu Schicht zwei aneinandergrenzende Schaumplatten (3, 5) ebenfalls haftend miteinander verbindet;
dadurch gekennzeichnet, daß
- sowohl die Radialverbindung (6) als auch die Axialverbindung (7) durch eine Schicht aus einem nichtaufschäumbaren polymeren Werkstoff gebildet sind, wobei die einzelnen Schichten für die Radial- und Axialverbindung so miteinander verbunden sind, daß jede Schaumplatte (3, 4, 5) vollständig eingekammert ist.

3. Auftriebskörper nach Anspruch 1, dadurch gekennzeichnet, daß zusätzlich die Axialverbindung (7) durch eine Schicht aus einem nichtaufschäumbaren Werkstoff gebildet ist, wobei die einzelnen Schichten für die Radial- und Axialverbindung so miteinander verbunden sind, daß jede Schaumplatte (3, 4, 5) vollständig eingekammert ist.

4. Auftriebskörper nach einem der Ansprüche 1 bis 3, dadurch gekennzeichnet, daß die Schaumplatten (3, 4, 5) aus Polyethylen (PE), Polyurethan (PU), Polypropylen (PP), Polystyrol (PS) oder Polyvinylchlorid (PVC) bestehen.

5. Auftriebskörper nach einem der Ansprüche 1 bis 4, dadurch gekennzeichnet, daß der polymere Werkstoff für die Radialverbindung (6) und Axialverbindung (7) jeweils eine Kautschukmischung auf Basis Ethylen-Propylen-Dien-Mischpolymerisat (EPDM) oder eines Verschnittes von EPDM mit Naturkautschuk (NR) und/oder mit Styrol-Butadien-Kautschuk (SBR) ist, vorzugsweise in Verbindung mit einer Schaumplatte (3, 4, 5) aus PE oder PP.

6. Auftriebskörper nach einem der Ansprüche 1 bis 4, dadurch gekennzeichnet, daß der polymere Werkstoff für die Radialverbindung (6) und Axialverbindung (7) jeweils eine Kautschukmischung auf Basis Polyurethan (PUR) oder eines Verschnittes von PUR mit Nitrilkautschuk (NBR) ist, vorzugsweise in Verbindung mit einer Schaumplatte (3, 4, 5) aus PU.

7. Auftriebskörper nach einem der Ansprüche 1 bis 4, dadurch gekennzeichnet, daß der polymere Werkstoff für die Radialverbindung (6) und Axialverbindung (7) jeweils eine Kautschukmischung auf Basis SBR oder eines Verschnittes von SBR mit EPDM und/oder mit NR ist, vorzugsweise in Verbindung mit einer Schaumplatte (3, 4, 5) aus PS.

8. Auftriebskörper nach einem der Ansprüche 1 bis 4, dadurch gekennzeichnet, daß der polymere Werkstoff für die Radialverbindung (6) und Axialverbindung (7) jeweils eine Kautschukmischung auf Basis NBR oder eines Verschnittes von NBR mit PVC ist, vorzugsweise in Verbindung mit einer Schaumplatte (3, 4, 5) aus PVC.

9. Auftriebskörper nach einem der Ansprüche 1 bis 8, dadurch gekennzeichnet, daß die Radialverbindung (6) und Axialverbindung (7) jeweils eine Mindestschichtstärke von 0,5 mm aufweisen.

10. Auftriebskörper nach einem der Ansprüche 1 bis 9, dadurch gekennzeichnet, daß die Radialverbindung (6) einen Winkel α von 45° bis 90° aufweist, und zwar bezogen auf die Axialverbindung (7).

## Claims

1. Float (2) for buoyant hoses, consisting at least of
- a multi-layer foam body which surrounds the buoyant hose (1), the foam body being composed of individual foam sheets (3, 4, 5), forming a radial joint (6) which joins two abutting foam sheets (3, 4) adhesively to one another within a layer, and an axial joint (7) which also joins two abutting foam sheets (3, 5) adhesively to one another from layer to layer,
characterised in that
- only the radial joint (6) is formed by a layer of a polymer material which is foamed when exposed to heat and takes up a greater volume.

2. Float (2) for buoyant hoses, consisting at least of
- a multi-layer foam body which surrounds the buoyant hose (1), the foam body being composed of individual foam sheets (3, 4, 5), forming a radial joint (6) which joins two abutting foam sheets (3, 4) adhesively to one another within a layer, and an axial joint (7) which also joins two abutting foam sheets (3, 5) adhesively to one another from layer to layer,
characterised in that
- both the radial joint (6) and the axial joint (7) are formed by a layer of a polymer material which cannot be foamed, the individual layers for the radial and axial joints being joined to one another so that each foam sheet (3, 4, 5) is enclosed completely.

3. Float according to claim 1, characterised in that in addition the axial joint (7) is formed by a layer of a material which cannot be foamed, the individual layers for the radial and axial joints being joined to one another so that each foam sheet (3, 4, 5) is enclosed completely.

4. Float according to one of claims 1 to 3,
characterised in that the foam sheets (3, 4, 5) consist of polyethylene (PE), polyurethane (PU), polypropylene (PP), polystyrene (PS) or polyvinylchloride (PVC).

5. Float according to one of claims 1 to 4,
characterised in that the polymer material for the radial joint (6) and the axial joint (7) is in each case a rubber mixture based on ethylene-propylene-diene mixed polymer (EPDM) or a blend of EPDM with natural rubber (NR) and/or with styrene-butadene-rubber (SBR), preferably in combination with a foam sheet (3, 4, 5) made of PE or PP.

6. Float according to one of claims 1 to 4,
characterised in that the polymer material for the radial joint (6) and the axial joint (7) is in each case a rubber mixture based on polyurethane (PUR) or a blend of PUR with nitrile rubber (NBR), preferably in combination with a foam sheet (3, 4, 5) made of PU.

7. Float according to one of claims 1 to 4,
characterised in that the polymer material for the radial joint (6) and the axial joint (7) is in each case a rubber mixture based on SBR or a blend of SBR with EPDM and/or with NR, preferably in combination with a foam sheet (3, 4, 5) made of PS.

8. Float according to one of claims 1 to 4,
characterised in that the polymer material for the radial joint (6) and the axial joint (7) is in each case a rubber mixture based on NBR or a blend of NBR with PVC, preferably in combination with a foam sheet (3, 4, 5) made of PVC.

9. Float according to one of claims 1 to 8,
characterised in that the radial joint (6) and the axial joint (7) in each case exhibit a minimum layer thickness of 0.5 mm.

10. Float according to one of claims 1 to 9,
characterised in that the radial joint (6) has an angle α of 45° to 90°, in relation to the axial joint (7).

## Revendications

1. Flotteur (2) pour tuyaux flottants constitué au moins d'
- un corps alvéolaire à plusieurs couches entourant le tuyau flottant (1), le corps alvéolaire étant composé de plaques alvéolaires (3, 4, 5) individuelles et, précisément, en formant une liaison radiale (6), qui relie ensemble par adhésion deux plaques alvéolaires (3, 4) se touchant l'une l'autre à l'intérieur d'une couche, ainsi qu'une liaison axiale (7) qui relie également ensemble par adhésion deux plaques alvéolaires (3,5) limitrophes d'une couche à une autre ;
caractérisé en ce que
- la liaison radiale (6) est exclusivement formée par une couche en un matériau polymère qui devient alvéolaire et d'un plus grand volume sous l'effet de la chaleur.

2. Flotteur (2) pour tuyaux flottants constitué au moins d'
- un corps alvéolaire à plusieurs couches, entourant un tuyau flottant (1), le corps alvéolaire étant composé de plaques alvéolaires (3, 4, 5) individuelles et précisément en formant une liaison radiale (6) qui relie ensemble avec adhésion à l'intérieur d'une couche deux plaques alvéolaires (3, 4) se touchant l'une l'autre, ainsi que formant une liaison axiale (7) qui relie également ensemble par adhésion deux plaques alvéolaires (3, 5) limitrophes, d'une couche à l'autre ;
caractérisé en ce que
- tant la liaison radiale (6) qu'également la liaison axiale (7) sont formées par une couche d'un matériau polymère non susceptible de prendre un état alvéolaire, les différentes couches pour la liaison radiale et la liaison axiale étant reliées ensemble de manière que chaque plaque alvéolaire (3, 4, 5) soit complètement enclose.

3. Flotteur selon la revendication 1, caractérisé en ce que, en plus, la liaison axiale (7) est formée par une couche d'un matériau non susceptible de devenir alvéolaire, les différentes couches de la liaison radiale et de la liaison axiale étant reliées ensemble de manière que chaque plaque alvéolaire (3, 4, 5) soit complètement enclose.

4. Flotteur selon l'une des revendications 1 à 3,
caractérisé en ce que les plaques alvéolaires (3, 4, 5) sont constituées de polyéthylène (PB), polyuréthane (PU), polypropylène (PP) ou polychlorure de vinyl (PVC).

5. Flotteur selon l'une des revendications 1 à 4,
caractérisé en ce que le matériau polymère prévu pour la liaison radiale (6) et la liaison axiale (7) est respectivement un mélange de caoutchouc à base de polymérisat mélangé éthylène-propylène-diène (EPDM) ou d'un coupage d'EPDM avec un caoutchouc naturel (NR) et/ou avec un caoutchouc styrène-butadiène (SBR), de préférence en liaison avec une plaque alvéolaire (3, 4, 5) en PE ou PP.

6. Flotteur selon l'une des revendications 3 à 4,
caractérisé en ce que le matériau polymère de la liaison radiale (6) et de la liaison radiale (7) est chaque fois un mélange de caoutchouc à base de polyuréthane (PUR) ou d'un coupage de PUR avec du caoutchouc au nitrile (NBR), de préférence en liaison avec une plaque alvéolaire (3, 4, 5) en PU.

7. Flotteur selon l'une des revendications 3 à 4,
caractérisé en ce que le matériau polymère prévu pour la liaison radiale (6) et la liaison axiale (7) est chaque fois un mélange de caoutchouc à base de SBR ou un coupage de SBR avec de l'OBDM et/ou du NR, de préférence en liaison avec une plaque alvéolaire (3, 4, 5) en PS.

8. Flotteur selon l'une des revendications 3 à 4,
caractérisé en ce que le matériau polymère prévu pour la liaison radiale (6) et la liaison axiale (7) est respectivement un mélange de caoutchouc à base de NBR ou un coupage de NBR avec du PVC, de préférence avec une plaque alvéolaire (3, 4, 5) en PVC.

9. Flotteur selon l'une des revendications 1 à 8,
caractérisé en ce que la liaison radiale (6) et la liaison axiale (7) présentent chacune une épaisseur de couche minimale de 0,5 mm.

10. Flotteur selon l'une des revendication 1 à 9,
caractérisé en ce que la liaison radiale (6) présente un angle a d'une valeur de 45° à 90° et précisément en se référant à la liaison axiale (7).
